# EUROPEAN PATENT SPECIFICATION

(11) **EP 1 747 381 B1**
(45) Date of publication and mention of the grant of the patent: **14.11.2007**
(21) Application number: 05722277.0
(22) Date of filing: 24.03.2005
(51) Int. Cl.: F16C 1/28, F16C 27/02

(54) **BEARING MEANS FOR A HAND HELD PORTABLE TOOL SUCH AS A BRUSH CUTTER**
LAGERMITTEL FÜR EIN TRAGBARES HANDWERKZEUG, WIE ZUM BEISPIEL EIN FREISCHNEIDEGERÄT
MOYEN PORTEUR POUR OUTIL PORTABLE A MAIN DU TYPE DEBROUSSAILLEUSE

(30) Priority: 02.04.2004 SE 0400902
(43) Date of publication of application: 31.01.2007
(73) Proprietor: Husqvarna AB, 561 82 Huskvarna (SE)
(72) Inventor: KRAGNER, Marcus, S-561 49 Huskvarna (SE); ENGVALL, Thomas, S-564 34 Bankeryd (SE); FÄLTH, Marcus, 560 27 Tenhult (SE)
(74) Representative: Hyltner, Jan-Olof
(86) International application number: PCT/SE2005/000450
(87) International publication number: WO 2005/095808

(56) References cited:
- US-A- 5 839 961
- US-A- 6 010 407

## Description

This invention relates to a bearing means for a hand held portable tool such as a brush cutter, a trimmer or the like, said means comprising an elongated bearing sleeve that is provided with outwardly extending flanges or the like.

Bearing means of the type mentioned above are used to support elongated drive shafts that transmit forces from a driving unit to a remote cutting tool that is placed at the outer end of a tube shaped casing. Such bearing means are for instance described in US 5364307, US 5599233 and DE 3839548 and comprises an elongated sleeve with a circular cross section having outwardly extending flanges that rest against the surrounding casing. In order to make it possible to insert the bearing means into the casing and simultaneously avoid any play and keep the bearing sleeve in a central position when the drive shaft rotates the flanges are resilient. This means that the flanges as well as the sleeve have to be designed carefully since a flange that is too soft does not work properly with respect to the vibrations caused by the drive shaft whereas, if the flanges are too hard, the bearing means is difficult to insert into the casing.

The purpose of this invention is to create a new type of bearing means making it possible to decrease the vibrations on the casing caused by the drive shaft and to optimize the design and material thickness of the bearing means. Further the arrangement allows diametrical variations of the drive shaft as well as of the casing substantially without influencing the inner shape of the sleeve. An additional advantage is that the shape of the bearing means makes it possible to achieve a better lubrication than previously.

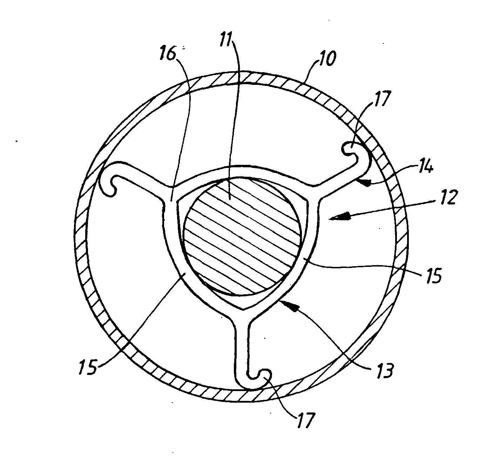

An embodiment of the invention will now be described with reference to the accompanying drawing that shows a cross section of the bearing arrangement with the bearing means, the drive shaft and the casing.

The bearing arrangement comprises an outer elongated tubular casing 10 that at one end is provided with drive means such as a combustion engine (not shown) or an electric motor whereas the other end of the casing is provided with some type of cutting tool such as a chain saw or a trimmer head (not shown). The power from the drive means is via a drive shaft 11 transferred to the cutting tool. The drive shaft is surrounded by a bearing means 12 that comprises a bearing sleeve 13 with several flanges 14 extending radially outwards from the sleeve.

The bearing sleeve, which preferably is made of plastic and is integrated with the flanges, has a mainly triangular shape with three slightly curved wall portions 15 that are joined to one another at their ends to define the tips 16 of the triangle. Consequently the distance between the inner wall of the sleeve 13 and a circle inscribed in the sleeve increases from the mid part of each wall portion 15 towards the tip 16 of the triangle.

The flanges 14 are placed at the tips 16 of the triangle and are at their outer ends provided with a hook shaped outer portion 17. These hook shaped portions safeguard that manufacturing shrinkage occurs at the tip portion of the hook which means that the outer shape of the detail is diametrically stable.

In order to assemble the bearing arrangement the bearing means 12 is pushed into the tube casing 10 from one of its ends which means that the hook shaped portion 17 of the flanges 14 will come into engagement with the casing and cause the flanges to move somewhat inwards thereby compressing the sleeve 13 at the tips 16 of the triangle such that the complete bearing means can be pushed into the casing. The resilient forces of the sleeve will then keep the bearing sleeve in the right position in the casing and the drive shaft can than easily be inserted into the bearing sleeve.

It is of course also possible to use other geometric configurations of the cross section of the bearing sleeve such as square, pentagonal, hexagonal and so on and to place the flange at such point where the inner surface is at a distance from the inscribed circle such that the material of the sleeve serves as a spring for the radial movement of the flanges.

## Claims

1. Bearing means for a hand held portable tool such as a brush cutter, a trimmer or the like, said means comprising an elongated bearing sleeve (13) that is provided with outwardly extending flanges (14), said bearing sleeve (13) has a non circular inner surface, **characterized in that** the flange material and the sleeve material have such characteristics that radial forces acting on the flanges (14) and that are directed towards the center of the sleeve (13) is transferred to resilient deflections of the sleeve (13)

2. Bearing means according to claim 1 **characterized in that** at least one of the flanges (14) extend from the bearing sleeve at a point where the inner surface is positioned at a distance from a circle that is inscribed in the inner periphery of the sleeve.

3. Bearing means according to any of the preceding claims **characterized in that** the sleeve (13) has a mainly triangular shape.

4. Bearing means according to claim 3, **characterized in that** a flange (14) extends mainly radially outwards from each tip (16) of the triangle.

5. Bearing means according to any of the preceding claims **characterized in that** the outer part of at least one of the flanges is provided with a hook shaped portion (17).

## Patentansprüche

1. Lagermittel für ein tragbares Handwerkzeug wie zum Beispiel ein Freischneidegerät, einen Trimmer oder dergleichen, wobei die Mittel eine lang gestreckte Lagerhülse (13) aufweisen, die mit sich nach außen erstreckenden Flanschen (14) versehen ist, wobei die Lagerhülse (13) eine unrunde Innenfläche aufweist, **dadurch gekennzeichnet, dass** der Werkstoff des Flansches und der Werkstoff der Hülse solche Eigenschaften aufweisen, dass auf die Flansche (14) einwirkende radiale Kräfte, die zur Mitte der Hülse (13) hin gerichtet sind, in elastische Durchbiegungen der Hülse (13) umsetzbar sind.

2. Lagermittel nach Anspruch 1, **dadurch gekennzeichnet, dass** mindestens einer der Flansche (14) sich von der Lagerhülse aus an einem Punkt erstreckt, an dem die Innenfläche in einem Abstand von einem Kreis positioniert ist, der in den Innenumfang der Hülse eingeschrieben ist.

3. Lagermittel nach einem der vorhergehenden Ansprüche, **dadurch gekennzeichnet, dass** die Hülse (13) eine hauptsächlich dreieckige Form aufweist.

4. Lagermittel nach Anspruch .3, **dadurch gekennzeichnet, dass** sich ein Flansch (14) hauptsächlich von jeder Spitze (16) des Dreiecks radial nach außen erstreckt.

5. Lagermittel nach einem der vorhergehenden Ansprüche, **dadurch gekennzeichnet, dass** der außen liegende Teil von mindestens einem der Flansche mit einem hakenförmigen Abschnitt (17) versehen ist.

## Revendications

1. Moyen support d'un outil à main portable tel qu'une débroussailleuse, une tailleuse de haies ou analogue, ledit moyen comprenant un manchon support allongé (13) qui est muni d'ailes (14) s'étendant vers l'extérieur, ledit manchon (13) a une surface intérieure non circulaire, **caractérisé en ce que** le matériau des ailes et le matériau du manchon ont des caractéristiques telles que les forces radiales agissant sur les ailes (14) et qui sont dirigées en direction du centre du manchon (13) sont transférées à des déformations élastiques du manchon (13).

2. Moyen support selon la revendication 1, **caractérisée en ce que** au moins une des ailes (14) s'entend depuis le manchon allongé en un point où la surface intérieure est positionnée à distance d'un cercle qui est inscrit dans la périphérie intérieure du manchon.

3. Moyen support selon l'une quelconque des revendications précédentes, **caractérisé en ce que** le manchon (13) a une forme essentiellement triangulaire.

4. Moyen support, selon la revendication 3, **caractérisé en ce que** une aile (14) s'étend essentiellement radialement vers l'extérieur de chaque sommet (16) du triangle.

5. Moyen support selon l'un quelconque des revendications précédentes, **caractérisé en ce que** la partie extérieure d'au moins une aile est munie d'une portion (17) en forme de crochet.
